# FASCICULE DE BREVET EUROPEEN

(11) **EP 2 781 454 B1**
(45) Date de publication et mention de la délivrance du brevet: **02.01.2019**
(21) Numéro de dépôt: 13305346.2
(22) Date de dépôt: 21.03.2013
(51) Int. Cl.: B64G 1/50, F28F 13/00, F25D 19/00, F28D 21/00

(54) **Dispositif de conduction thermique et son procédé de fabrication**
Wärmeleitungsvorrichtung und ihr Herstellungsverfahren
Heat-conduction device and method for manufacturing same

(43) Date de publication de la demande: 24.09.2014
(73) Titulaire: Tresse Métallique J. Forissier, 42400 Saint-Chamond (FR)
(72) Inventeur: Boidard, Denis, 69350 LA MULATIERE (FR); Machado, Antonio, 42152 L'HORME (FR); Sibue, Vincent, 74000 ANNECY (FR)
(74) Mandataire: Cabinet Laurent & Charras

(56) Documents cités:
- EP-A1- 0 527 694
- WO-A1-93/07426
- FR-A- 1 213 626
- FR-A- 1 301 840
- FR-E- 63 009
- US-A- 5 077 637

## Description

### DOMAINE TECHNIQUE

La présente invention à trait à un dispositif de conduction thermique comportant au moins deux pièces thermiquement conductrices et une pluralité de tresses métalliques thermiquement conductrices reliant les deux pièces, particulièrement adapté aux applications dans le domaine de l'aérospatial et de l'aéronautique, et son procédé de fabrication.

### ART ANTERIEUR

Dans le domaine des applications spatiales, il est bien connu que les satellites, tels que les satellites de télécommunications par exemple, qui embarquent un nombre toujours plus grand d'équipements toujours plus complexes, consomment toujours plus d'énergie et par conséquent produisent plus de chaleur. Ainsi, ces satellites doivent pouvoir dissiper la chaleur produite par les équipements embarqués de manière performante, afin de garantir la pérennité des performances ce ceux-ci.

Afin de conduire la chaleur vers des dissipateurs de chaleur, il est usuel d'utiliser des dispositifs de conduction thermique. Ces dispositifs sont généralement constitués d'au moins deux pièces thermiquement conductrices, aptes à être fixées respectivement à un équipement produisant de la chaleur et à un dissipateur de chaleur par exemple, et d'une pluralité de tresses métalliques thermiquement conductrices et flexibles, lesdites tresses métalliques étant solidarisées auxdites pièces.

Le document FR 1 301 840 décrit un pallier aérodynamique perfectionné comprenant des moyens de transfert de chaleur entre le coussinet et le carter du pallier, par exemple sous forme de tresses de fils de cuivre ou des faisceaux de fils de cuivre à brins multiples de faible section, ou encore de fils de cuivre séparés disposés en nappes radiales fixés à leurs extrémités par soudure ou brasure.

Le document WO 93/07426 décrit un dispositif pour réguler la température dans une chambre contenant des objets au moyen d'un élément de refroidissement thermoélectrique connecté à ladite chambre à travers des éléments thermo-conducteurs de chaleur, qui sont flexibles sur au moins une partie du prolongement de ceux-ci.

Afin de solidariser les tresses métalliques sur les pièces, on utilise habituellement un procédé de brasage à plat électrique ou à la flamme.

Compte tenu de la forme circulaire et des petites dimensions de ces tresses, et des trous dans lesquels elles sont brasées, les opérations de brasage à la flamme s'avèrent difficiles, et en tout état de cause inefficace, et les opérations de brasage électrique s'avèrent impossibles du fait de la configuration.

En effet, lors d'un brasage à la flamme, il est nécessaire de considérablement charger en brasure les trous recevant les extrémités libres des tresses, lesdits trous étant borgnes et pratiqués dans les pièces du dispositif de conduction thermique, afin d'obtenir une bonne liaison car une grande partie de la brasure monte dans les tresses par capillarité. Après refroidissement, les tresses sont rigidifiées et ne présentent plus une souplesse suffisante pour une utilisation dans le domaine de l'aérospatial notamment.

Par ailleurs, lors du brasage à la flamme, le temps d'exposition à la flamme détériore les fils de la tresse et les pièces sur lesquelles les tresses sont soudées. Cette détérioration consiste essentiellement en une oxydation des fils des tresses et/ou en une rupture mécanique de certains fils des tresses.

### EXPOSE DE L'INVENTION

L'un des buts de l'invention est donc de remédier à ces inconvénients en proposant un dispositif de conduction thermique, et son procédé de fabrication, de conception simple et peu onéreuse, procurant une grande flexibilité et ne comportant pas de traces d'oxydation.

A cet effet, et conformément à l'invention, il est proposé un dispositif de conduction thermique comprenant au moins deux pièces thermiquement conductrices munies de trous et une pluralité de tresses métalliques thermiquement conductrices dont les extrémités libres sont soudées dans les trous desdites pièces conforme aux caractéristiques de la revendication 1.

On comprend bien que le compactage électrique des extrémités libres des tresses diminue la part de vide dans les extrémités libres des tresses métalliques ce qui permet d'éviter la migration du métal d'apport dans les tresses métallique et, in fine, la rigidification desdites tresses métalliques.

Les tubes sertis aux extrémités libres des tresses métalliques procurent une barrière à l'encontre du métal d'apport lors du brasage, évitant ainsi que le métal d'apport ne migre dans les tresses métalliques le long de leurs parois extérieures, lors du brasage, afin de préserver la souplesse des tresses métalliques.

Lesdits tubes sertis font saillie des trous des pièces et de préférence sur une longueur inférieure ou égale à 2 mm.

Un autre objet de l'invention concerne un procédé de fabrication d'un dispositif de conduction thermique comprenant au moins deux pièces thermiquement conductrices munies de trous et une pluralité de tresses métalliques thermiquement conductrices dont les extrémités libres sont soudées dans les trous desdites pièces ; ledit procédé est remarquable en ce qu'il comporte au moins les étapes suivantes de compactage électrique des extrémités libres des tresses métalliques, de dépôt d'une brasure au fond des trous des pièces, d'introduction des extrémités libres compactées des tresses métalliques dans les trous des pièces, et de brasage au four.

Le compactage électrique des extrémités libres des tresses diminue la part de vide dans les extrémités libres des tresses métalliques ce qui permet d'éviter la migration du métal d'apport dans les tresses métallique et, in fine, la rigidification desdites tresses métalliques.

Par ailleurs, le brasage au four permet d'obtenir des dispositifs de conduction thermique sans traces d'oxydation permettant leur utilisation dans des domaines d'application tels que l'aérospatial ou l'aéronautique notamment.

De manière avantageuse, préalablement à l'introduction des extrémités libres compactées des tresses métalliques dans les trous des pièces, il comprend une étape de sertissage de tubes aux extrémités libres des tresses métalliques, lesdits tubes coiffant intégralement ou partiellement les extrémités compactées desdites tresses métalliques.

Par ailleurs, après l'étape de sertissage des tubes sur les extrémités libres des tresses métalliques, les extrémités libres des tubes sont découpées de telle manière que leur longueur soit tout juste supérieure à la profondeur des trous des pièces.

De préférence, les extrémités libres des tubes sont découpées de telle manière que lesdits tubes fassent saillie des trous des pièces sur une longueur inférieure ou égale à 2 mm.

De plus, l'étape de brasage au four dit brasage diffusion comporte au moins les étapes suivantes de montée en température avec palier d'homogénéisation de la charge du métal d'apport à une température inférieure à la température de liquidus dudit métal d'apport, puis de montée en température avec palier dit de brasage à une température supérieure à la température de liquidus du métal d'apport, et finalement de refroidissement du dispositif jusqu'à une température déterminée.

Ladite étape de refroidissement comporte les étapes suivantes de refroidissement lent jusqu'à une température déterminée, puis de refroidissement dit turbiné dans lequel une ventilation forcée est actionnée dans le four jusqu'à ce que les dispositifs présentent une température d'environ 60°C.

### DESCRIPTION SOMMAIRE DES FIGURES

D'autres avantages et caractéristiques ressortiront mieux de la description qui va suivre, d'une unique variante d'exécution, donnée à titre d'exemple non limitatif, du dispositif de conduction thermique et de son procédé de fabrication suivant l'invention, en référence aux dessins annexés sur lesquels :
- la figure 1 est une vue en perspective du dispositif de conduction thermique suivant l'invention,
- la figure 2 est une vue en coupe sagittale partielle du dispositif de conduction thermique suivant l'invention représenté sur la figure 1,
- les figures 3A à 3F sont des représentations schématiques des différentes étapes du procédé de fabrication du dispositif de conduction thermique suivant l'invention..

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas nécessairement tracées à l'échelle et les dimensions des éléments peuvent avoir été exagérées pour faciliter la compréhension de l'invention.

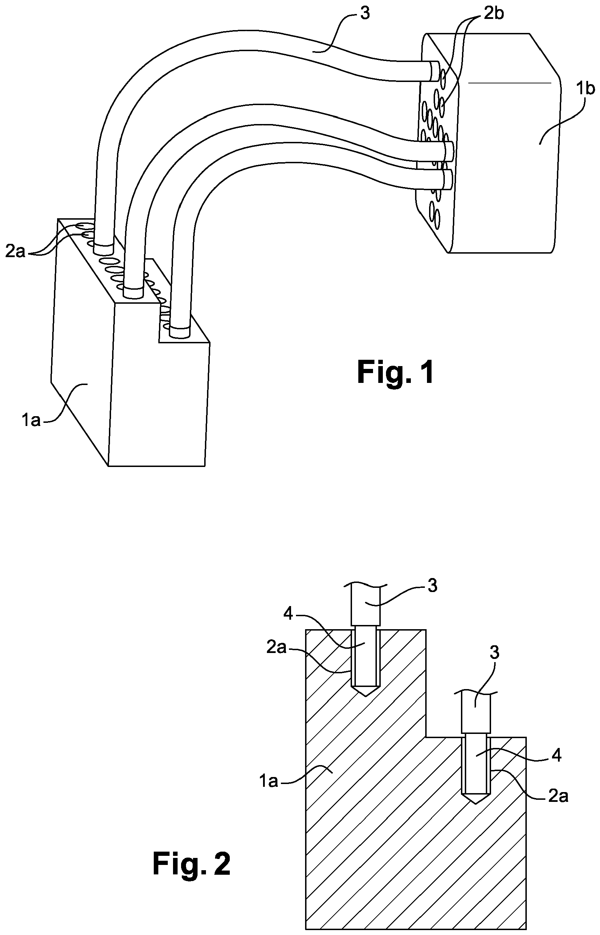

En référence aux figures 1 et 2, le dispositif de conduction thermique suivant l'invention comprend deux pièces thermiquement conductrices (1a,1b) sensiblement parallélépipédiques munies de trous (2a,éb) et une pluralité de tresses métalliques thermiquement conductrices (3) dont les extrémités libres sont soudées dans les trous (2) desdites pièces (1a,1b).

Les extrémités libres des tresses (3) sont compactées électriquement afin d'éviter que le métal d'apport pour le brasage ne monte par capillarité dans les tresses lors de leur soudure. Ainsi, les extrémités libres des tresses (3) comportent un segment dit compacté (4) présentant une longueur sensiblement égale à la profondeur des trous (2a,2b).

On comprend bien que le compactage électrique des extrémités libres des tresses (3) diminue la part de vide dans les extrémités libres desdites tresses métalliques (3) ce qui permet d'éviter la migration du métal d'apport de la brasure dans les tresses métallique (3) et, in fine, la rigidification desdites tresses métalliques (3) après le brasage.

Par ailleurs, le dispositif suivant l'invention comporte un tube (5) serti à chacune des extrémités libres des tresses (3), le diamètre externe desdits tubes sertis (5) étant tout juste inférieur au diamètre interne des trous (2a,2b) des pièces (1a,1b). Lesdits tubes sertis (5) présentent une longueur tout juste supérieure à la profondeur des trous (2a,2b) pratiqués dans les pièces (1a,1b) de telle manière que les tubes sertis (5) fassent saillie des trous (2a,2b) des pièces (1a,1b), lesdits tubes (5) faisant saillie des trous (2a,2b) de préférence sur une longueur inférieure ou égale à 2 mm.

Ces tubes sertis (5) aux extrémités libres des tresses métalliques (3) procurent une barrière à l'encontre du métal d'apport lors du brasage, évitant ainsi que le métal d'apport ne migre dans les tresses métalliques (3) le long de leurs parois extérieures, lors du brasage, afin de préserver la souplesse desdites tresses métalliques (3).

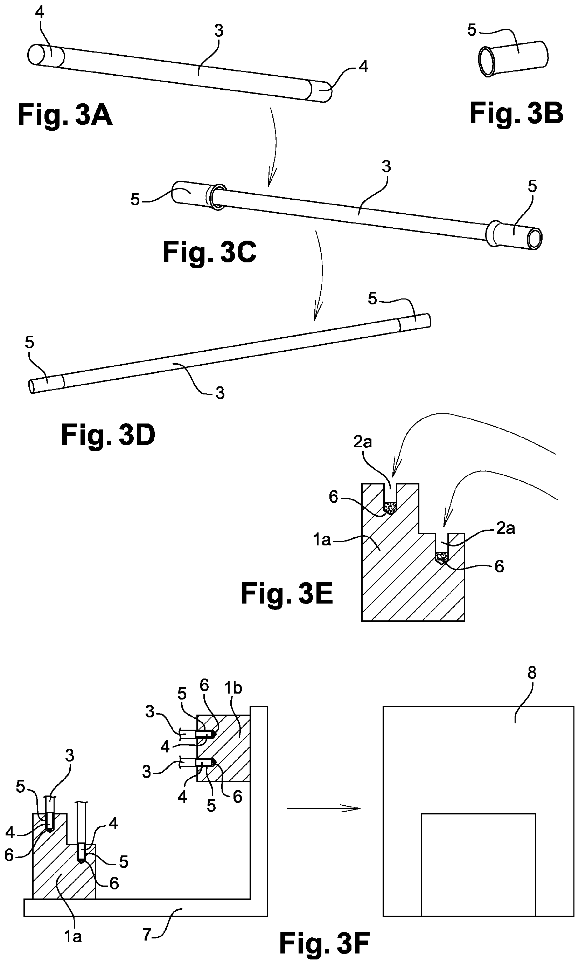

En référence aux figures 3A à 3F, le procédé de fabrication de tels dispositifs de conduction thermique comporte une première étape (Figure 3A) de compactage des extrémités libres des tresses métalliques (3) pour former des segments dits compactés (4) aux extrémités libres des tresses (3), puis, un tube (5) représenté sur la figure 3B est positionné à chacune des extrémités libres des tresses (3) de telle manière que lesdits tubes (5) coiffent les segments compactés (4) (Figure 3C). Lesdits tubes (5) sont alors sertis aux extrémités libres des tresses (3), en référence à la figure 3D. Compte tenu de l'allongement des tubes (5), et par conséquent des tresses (3), lors de l'étape de sertissage, le procédé comporte une étape supplémentaire de découpe des extrémités libres des tubes (5) afin d'ajuster individuellement les longueurs desdits tubes (5) sertis. Les extrémités libres des tubes (5) sont découpées de telle manière que leur longueur soit tout juste supérieure à la profondeur des trous (2a,2b) des pièces (1a,1b). De préférence, les extrémités libres des tubes (5) sont découpées de telle manière que lesdits tubes (5) fassent saillie des trous (2a,2b) des pièces (1a,1b) sur une longueur inférieure ou égale à 2 mm.

Par ailleurs, on observera que lesdits tubes (5) pourront coiffer intégralement ou partiellement les extrémités compactées (4) desdites tresses métalliques (3).

Le sertissage des tubes (5) améliore le compactage des segments compactés (4) des tresses (3). De plus, la paroi externe des tubes (5) présentent une surface plus lisse sur laquelle la brasure présentera une meilleure mouillabilité.

En référence à la figure 3E, le procédé comporte une étape de dépôt d'une brasure (6) au fond des trous (2a,2b) des pièces (1a,1b) au moyen d'une seringue par exemple, puis, en référence à la figure 3F, les pièces (1a,1b) et les tresses (3) dont les extrémités libres sont introduites dans les trous (2a,2b) des pièces (1a,1b) sont positionnés sur un support de cuisson (7) en forme général de L par exemple avant d'être placées dans un four de brasage (8).

On notera que le brasage au four permet d'obtenir des dispositifs de conduction thermique sans traces d'oxydation permettant leur utilisation dans des domaines d'application tels que l'aérospatial ou l'aéronautique notamment.

Ladite étape de brasage au four dit « brasage diffusion » comporte au moins les étapes suivantes de montée en température avec palier d'homogénéisation de la charge du métal d'apport à une température inférieure à la température de liquidus dudit métal d'apport, puis de montée en température avec palier dit de brasage à une température supérieure à la température de liquidus du métal d'apport, et finalement de refroidissement du dispositif jusqu'à une température déterminée.

Ladite étape de refroidissement comporte de préférence les étapes suivantes de refroidissement lent jusqu'à une température déterminée, puis de refroidissement dit turbiné dans lequel une ventilation forcée est actionnée dans le four (8) jusqu'à ce que les dispositifs présentent une température d'environ 60°C.

Enfin, il est bien évident que les exemples que l'on vient de donner ne sont que des illustrations particulières en aucun cas limitatives quant aux domaines d'application de l'invention.

## Revendications

1. Dispositif de conduction thermique comprenant au moins deux pièces thermiquement conductrices (1a,1b) munies de trous (2a,2b) et une pluralité de tresses métalliques (3) thermiquement conductrices dont les extrémités libres sont soudées dans les trous (2a,2b) desdites pièces (1a,1b), ***caractérisé* en ce que** les extrémités libres des tresses (3) sont compactées électriquement et comportent chacune un tube (5) serti, le diamètre externe desdits tubes (5) étant tout juste inférieur au diamètre interne des trous (2a,2b) des pièces (1a,1b), afin d'éviter que la brasure ne monte par capillarité dans les tresses (3) lors de leur soudure.

2. Dispositif suivant la revendication 1 ***caractérisé* en ce que** les tubes sertis (5) font saillie des trous (2a,2b) des pièces (1a,1b).

3. Dispositif suivant la revendication 2 ***caractérisé* en ce que** les tubes sertis (5) font saillie des trous (2a,2b) des pièces (1a,1b) sur une longueur inférieure ou égale à 2 mm.

4. Procédé de fabrication d'un dispositif de conduction thermique comprenant au moins deux pièces thermiquement conductrices (1a,1b) munies de trous (2a,2b) et une pluralité de tresses métalliques (3) thermiquement conductrices dont les extrémités libres sont soudées dans les trous (2a,2b) desdites pièces (1a,1b), ***caractérisé* en ce qu'**il comporte au moins les étapes suivantes de :
- compactage électrique des extrémités libres des tresses métalliques (3),
- dépôt d'une brasure (6) au fond des trous (2a, 2b) des pièces (1a,1b),
- sertissage de tubes (5) aux extrémités libres des tresses métalliques (3), lesdits tubes (5) coiffant intégralement ou partiellement les extrémités compactées (4) desdites tresses métalliques (3).
- introduction des extrémités libres compactées (4) des tresses métalliques (3) avec les tubes (5), dans les trous (2a,2b) des pièces (1a,1b), et
- brasage au four (8).

5. Procédé suivant la revendication 4 ***caractérisé* en ce que**, après l'étape de sertissage des tubes (5) sur les extrémités libres des tresses métalliques (3), les extrémités libres des tubes (5) sont découpées de telle manière que leur longueur soit tout juste supérieure à la profondeur des trous (2a,2b) des pièces (1a,1b).

6. Procédé suivant la revendication 5 ***caractérisé* en ce que** les extrémités libres des tubes (5) sont découpées de telle manière que lesdits tubes (5) fassent saillie des trous (2a,2b) des pièces (1a,1b) sur une longueur inférieure ou égale à 2 mm.

7. Procédé suivant l'une quelconque des revendications 4 à 6 ***caractérisé* en ce que** l'étape de brasage au four (8) dit brasage diffusion comporte au moins les étapes suivantes de :
- montée en température avec palier d'homogénéisation de la charge du métal d'apport à une température inférieure à la température de liquidus dudit métal d'apport, puis
- montée en température avec palier dit de brasage à une température supérieure à la température de liquidus du métal d'apport, et finalement
- refroidissement du dispositif jusqu'à une température déterminée.

8. Procédé suivant la revendication 7 ***caractérisé* en ce que** l'étape de refroidissement comporte les étapes suivantes de :
- refroidissement lent jusqu'à une température déterminée, puis
- refroidissement dit turbiné dans lequel une ventilation forcée est actionnée dans le four jusqu'à ce que les dispositifs présentent une température d'environ 60°C.

## Patentansprüche

1. Wärmeleitungsvorrichtung, umfassend mindestens zwei wärmeleitende Teile (1a, 1b), die mit Bohrungen (2a, 2b) versehen sind, und eine Vielzahl von wärmeleitenden Metallgeflechten (3), deren freie Enden in den Bohrungen (2a, 2b) der Teile (1a, 1b) verschweißt sind, ***dadurch gekennzeichnet,* dass** die freien Enden der Geflechte (3) elektrisch verdichtet sind und jeweils ein eingefasstes Rohr (5) umfassen, wobei der Außendurchmesser der Rohre (5) knapp unter dem Innendurchmesser der Bohrungen (2a, 2b) der Teile (1a, 1b) liegt, um ein Aufsteigen des Lotes durch Kapillarwirkung in den Geflechten (3) während ihrer Verschweißung zu verhindern.

2. Vorrichtung nach Anspruch 1 ***dadurch gekennzeichnet,* dass** die eingefassten Rohre (5) aus den Bohrungen (2a, 2b) der Teile (1a,1b) herausragen.

3. Vorrichtung nach Anspruch 2, ***dadurch gekennzeichnet,* dass** die eingefassten Rohre (5) aus den Bohrungen (2a, 2b) der Teile (1a, 1b) über eine Länge von weniger als oder gleich 2 mm herausragen.

4. Verfahren zur Herstellung einer Wärmeleitungsvorrichtung umfassend mindestens zwei wärmeleitende Teilen (1a, 1b), die mit Bohrungen (2a, 2b) versehen sind, und eine Vielzahl von wärmeleitenden Metallgeflechten (3), deren freie Enden in den Bohrungen (2a, 2b) der Teile (1a, 1b) verschweißt sind, ***dadurch gekennzeichnet,* dass** es mindestens die folgenden Schritte umfasst:
- elektrische Verdichtung der freien Enden der Metallgeflechte (3),
- Abscheidung eines Lotes (6) am Boden der Bohrungen (2a, 2b) der Teile (1a, 1b),
- Einfassen von Rohren (5) an den freien Enden der Metallgeflechte (3), wobei die Rohre (5) die verdichteten Enden (4) der Metallgeflechte (3) vollständig oder teilweise bedecken,
- Einbringen der verdichteten freien Enden (4) der Metallgeflechte (3) mit den Rohren (5) in die Bohrungen (2a, 2b) der Teile (1a, 1b), und
- Löten im Ofen (8).

5. Verfahren nach Anspruch 4, ***dadurch gekennzeichnet,* dass** nach dem Schritt des Einfassens der Rohre (5) auf die freien Enden der Metallgeflechte (3) die freien Enden der Rohre (5) derart geschnitten werden, dass ihre Länge knapp größer als die Tiefe der Bohrungen (2a, 2b) der Teile (1a, 1b) ist.

6. Verfahren nach Anspruch 5, ***dadurch gekennzeichnet,* dass** die freien Enden der Rohre (5) derart geschnitten sind, dass die Rohre (5) aus den Bohrungen (2a, 2b) der Teile (1a, 1b) über eine Länge von weniger als oder gleich 2 mm herausragen.

7. Verfahren nach einem der Ansprüche 4 bis 6, ***dadurch gekennzeichnet,* dass** der Schritt des Lötens im Ofen (8), genannt Diffusionslöten, mindestens die folgenden Schritte umfasst:
- Temperaturanstieg mit einem Grad der Homogenisierung der Ladung des Füllmetalls bei einer Temperatur, die niedriger ist als die Liquidustemperatur des Füllmetalls, dann
- Temperaturanstieg mit einem sogenannten Lötlager bei einer Temperatur, die höher ist als die Liquidustemperatur des Füllmetalls, und schließlich
- Kühlung der Vorrichtung auf eine festgelegte Temperatur.

8. Verfahren nach Anspruch 7, ***dadurch gekennzeichnet,* dass** der Schritt der Kühlung die folgenden Schritte umfasst:
- langsames Abkühlen auf eine festgelegte Temperatur, dann
- sogenannte Turbinenkühlung, bei der eine Zwangsbelüftung im Ofen aktiviert wird, bis die Vorrichtungen eine Temperatur von ca. 60 °C aufweisen.

## Claims

1. A heat conduction device comprising at least two thermally conducting parts (1a, 1b) provided with holes (2a, 2b) and a plurality of thermally conducting metal plaits (3) the free ends of which are soldered in the holes (2a, 2b) of the said parts (1a, 1b), ***characterized* in that** the free ends of the plaits (3) are electrically compacted and each include a crimp tube (5), the outside diameter of the said tubes (5) being just less than the inside diameter of the holes (2a, 2b) of the parts (1a, 1b), in order to prevent the solder from rising through capillary action into the plaits (3) during the soldering thereof.

2. The device according to claim 1 ***characterized* in that** the crimp tubes (5) protrude from the holes (2a, 2b) of the parts (1a, 1b).

3. The device according to claim 2 ***characterized* in that** the crimp tubes (5) protrude from the holes (2a, 2b) of the parts (1a, 1b) by a length less than or equal to 2 mm.

4. A method of manufacturing a heat conducting device comprising at least two thermally conducting parts (1a, 1b) provided with holes (2a, 2b) and a plurality of thermally conducting metal plaits (3) the free ends of which are soldered in the holes (2a, 2b) of the said parts (1a, 1b), ***characterized* in that** it comprises at least the following steps of:
- electrical compaction of the free ends of the metal plaits (3),
- deposition of solder (6) at the bottom of the holes (2a, 2b) of the parts (1a, 1b),
- crimping of tubes (5) at the free ends of the metal plaits (3), the said tubes (5) fully or partially capping the compacted ends (4) of the said metal plaits (3),
- insertion of the compacted free ends (4) of the metal plaits (3) with the tubes (5), into the holes (2a, 2b) of the parts (1a, 1b), and
- furnace brazing (8).

5. The method according to claim 4 ***characterized* in that,** after the step of crimping tubes (5) onto the free ends of the metal plaits (3), the free ends of the tubes (5) are cut off in such a way that the length thereof is just greater than the depth of the holes (2a, 2b) of the parts (1a, 1b).

6. The method according to claim 5 ***characterized* in that** the free ends of the tubes (5) are cut in such a way that the said tubes (5) protrude from the holes (2a, 2b) of the parts (1a, 1b) by a length equal to or less than 2 mm.

7. The method according to any one of claims 4 to 6 ***characterized* in that** the furnace brazing step (8), called diffusion brazing, includes at least the following steps of:
- increasing the temperature to the homogenization level of the soldering agent filler at a temperature less than the liquidus temperature of the said soldering agent, then
- increasing the temperature to the so-called brazing level at a temperature higher than the liquidus temperature of the soldering agent, and finally
- cooling the device down to a specific temperature.

8. The method according to claim 7 ***characterized* in that** the cooling step comprises the following steps of:
- slowly cooling down to a specific temperature, then
- so-called turbinate cooling wherein forced ventilation is actuated in the furnace until the devices reach a temperature of about 60 °C.
